# EUROPÄISCHE PATENTSCHRIFT

(11) **EP 0 405 235 B1**
(45) Veröffentlichungstag und Bekanntmachung des Hinweises auf die Patenterteilung: **21.09.1994**
(21) Anmeldenummer: 90111218.5
(22) Anmeldetag: 13.06.1990
(51) Int. Cl.: F01K 23/06, F02C 3/28

(54) **Kombinierte Gas- und Dampfturbinen-Anlage mit Kohlevergasung**
Combined gas and steam turbine plant with coal gasification
Installation combinée de turbines à gaz et à vapeur avec une unité de gazéification

(30) Priorität: 27.06.1989 DE 3921439
(43) Veröffentlichungstag der Anmeldung: 02.01.1991
(73) Patentinhaber: SIEMENS AKTIENGESELLSCHAFT, 80333 München (DE)
(72) Erfinder: Stadie, Lothar, D-8552 Höchstadt (DE); Brückner, Hermann, D-8521 Uttenreuth (DE)

(56) Entgegenhaltungen:
- EP-A- 0 129 167
- EP-A- 0 212 311
- DE-A- 3 414 140
- DE-A- 3 416 708
- DE-A- 3 605 408
- DE-A- 3 714 854
- DE-A- 3 817 690
- FR-A- 2 256 954

## Beschreibung

Die Erfindung betrifft eine kombinierte Gas- und Dampfturbinen-Anlage mit einer dem Gasturbinenteil vorgeschalteten Kohlevergasungsanlage mit einer Wärmetauschereinrichtung, vorzugsweise mit einer der Wärmetauschereinrichtung nachgeschalteten Gasreinigungseinrichtung, mit einer vom Abgas der Gasturbine durchströmten Dampferzeugeranlage mit Economizer-Heizfläche, Verdampfer-Heizfläche und Überhitzer-Heizflächen, und mit einem mit der Dampferzeugeranlage verbundenen Dampfturbinenteil, der ein Hochdruck-Speisewassersystem besitzt.

Bei kombinierten Gas- und Dampfturbinen-Anlagen der eingangs definierten Art dienen die von der Kohlevergasungsanlage erzeugten Kohlegase nach ihrer Reinigung als Brennstoff zum Antrieb der Gasturbine (R. Müller, U. Schiffers: "Kohledruckvergasung für den Kombi-Prozeß", VGB Kraftwerkstechnik 68 (1988), S. 1022 - 1030). Die heißen und sauerstoffhaltigen Abgase der Gasturbine werden einem Abhitzedampferzeuger zur Erzeugung von Hochdruck- und Niederdruckdampf zugeführt.

Für die Gasreinigung in der Kohlevergasungsanlage und für die weitere Nutzung der Kohlegas-Wärmeenergie ist es angebracht, die bei der Kohlevergasung selbst weit über 1000 °C warmen Kohlegase abzukühlen. Die dabei im Kohlegas gebundene Wärmeenergie, die sogenannte "fühlbare Wärme", wird bei einer bekannten Kraftwerksanlage (Siemens-Publikation Nr. A19100-U936-A103-X-7600; Rainer Müller und Jürgen Karg: "Assessment of Coal Gasification Systems for combined Cycle Power Plants", insbesondere Figur 9) in sogenannten Rohgas-, Abhitze-Dampferzeugern oder Wärmetauschern zur Erzeugung von Dampf mit hoher Temperatur genutzt. Dieser Dampf wird in die Dampfturbine geleitet und trägt somit zur Verbesserung des Prozeßwirkungsgrads der Kraftwerksanlage bei. In diesen Rohgas-Dampferzeugern, Abhitze-Dampferzeugern oder Wärmetauschern treten aber infolge der relativ hohen Temperaturen Korrosionsschäden an den darin befindlichen Heizflächenrohren (Rohrsystem) auf.

Der Erfindung liegt die Aufgabe Zugrunde, den Wirkungsgrad einer kombinierten Anlage der eingangs genannten Art weiter zu erhöhen, gleichzeitig aber von einer Wärmeübertragung mit relativ geringer Temperatur Gebrauch zu machen und dementsprechend die Korrosionsschäden am Rohrsystem gering zu halten.

Diese Aufgabe wird erfindungsgemäß dadurch gelöst, daß die Wärmetauschereinrichtung der Kohlevergasungsanlage so geschaltet ist, daß sie ihre Wärmeenergie zur Speisewasservorwärmung an das Hochdruck-Speisewassersystem des Dampfturbinenteils überträgt.

Mit anderen Worten: Die Sekundärseite der Wärmetauschereinrichtung ist in das Hochdruck-Speisewassersystem in irgendeiner Weise eingeschaltet und wird dadurch vom Hochdruck-Speisewasser durchflossen. Dabei kann es sich um den Gesamtstrom oder nur um einen Teilstrom des Hochdruck-Speisewassers handeln.

Mit der direkten Übertragung der Wärmeenergie der Wärmetauschereinrichtung an das Hochdruck-Speisewassersystem, das die "fühlbare Wärme" aus der Kohlevergasungsanlage aufnimmt, kann die Kohlevergasungsanlage mit relativ hohem Druck gefahren werden, was im Zusammenhang mit dem anschließenden Dampferzeuger und dem Turbinensystem einen hohen Wirkungsgrad zur Folge hat.

Je nach Bedarf und Erfordernis sind gemäß den nachfolgenden Erläuterungen vorteilhafte Ausgestaltungen der Erfindung zur Einspeisung der Wärmeenergie der Wärmetauschereinrichtung in das Hochdruck-Speisewassersystem vorgesehen. Prinzipiell können die aus der Kohlevergasungsanlage mit einer Temperatur von weit über 1000 °C austretenden Kohlegase an beliebiger Stelle des Speisewassersystems mittels der Wärmetauschereinrichtung abgekühlt werden. Wichtig ist in jedem Fall, daß aus thermodynamischen Gründen die "fühlbare Wärme" des in der Kohlevergasungsanlage erzeugten brennbaren Kohlegases nicht als Verlustwärme an die Umgebung abgegeben wird, sondern auf hohem Druckniveau im Kraftwerksprozeß genutzt wird.

Eine sehr kostengünstige Möglichkeit, die "fühlbare Wärme" durch die Wärmetauschereinrichtung abzuführen, ist durch eine Variante 1 gegeben. Diese Variante 1 ist dadurch gekennzeichnet, daß die Wärmetauschereinrichtung der Economizer-Heizfläche der Dampferzeugeranlage vorgeschaltet ist.

Demgegenüber ist eine Verbesserung des Teillastverhältnisses durch eine Variante 2 gegeben. Diese Variante 2 zeichnet sich dadurch aus, daß die Wärmetauschereinrichtung zwischen der Economizer-Heizfläche und der Verdampfer-Heizfläche eingeschaltet ist.

Eine weitere Verbesserung der Teillastverhältnisse ist durch die Ausführung gemäß der Variante 3 zu erreichen. Variante 3 ist dadurch charakterisiert, daß die Wärmetauschereinrichtung parallel zur Economizer-Heizfläche geschaltet ist.

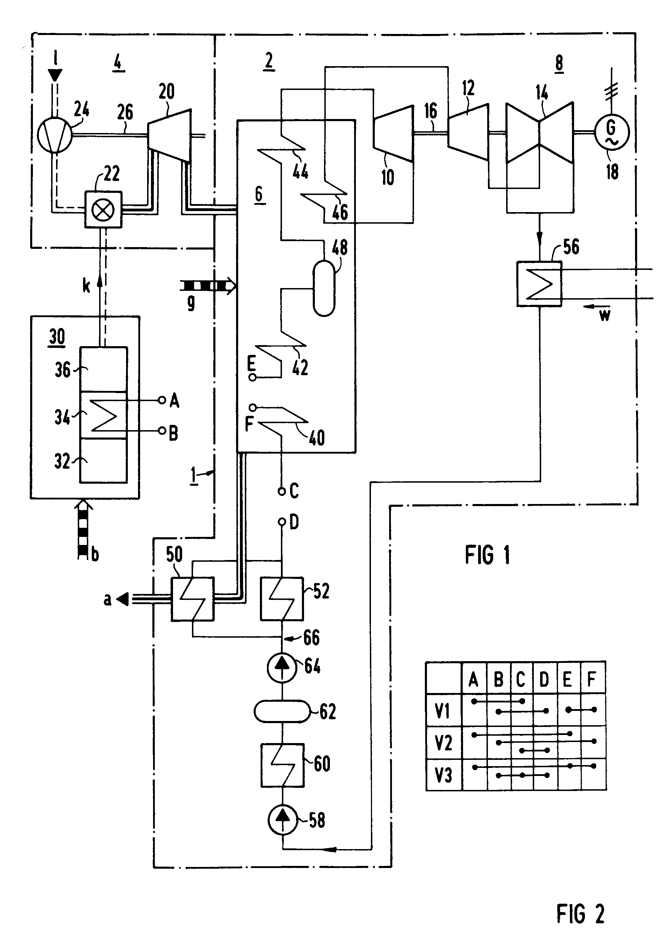

Die Erfindung wird im folgenden anhand von in den Figuren 1 und 2 dargestellten Ausführungsbeispielen näher erläutert. In Figur 1 sind dabei nur die zum Verständnis wesentlichen Teile einer kombinierten Gas- und Dampfturbinen-Anlage mit Kohlevergasung dargestellt. Und in der Tabelle nach Figur 2 ist in drei Varianten V1 bis V3 anhand der Schaltung der Anschlußpunkte A bis F in Figur 1 angegeben, wie die Energieübertragung der Wärmetauschereinrichtung an das Hochdruck-Speisewassersystem des Dampfturbinenteils erfolgen kann.

Das in Figur 1 dargestellte kombinierte Gasturbinen-Dampfturbinen-Kraftwerk 1 weist einen Dampfturbinenteil 2 und einen Gasturbinenteil 4 auf. Der Dampfturbinenteil 2 besitzt eine Dampferzeugeranlage 6 und eine Dampfturbine 8 mit einer Hochdruckstufe 10, einer Mitteldruckstufe 12 und einer Niederdruckstufe 14. Auf der gemeinsamen Welle 16 sitzt ein Generator 18.

Der Dampferzeugeranlage 6 ist der Gasturbinenteil 4 vorgeschaltet. Der Gasturbinenteil 4 enthält neben einer Gasturbine 20 eine Brennkammer 22, der über einen Verdichter 24 Luft 1 zugeführt wird. Der Verdichter 24 sitzt dabei auf der Welle 26 der Gasturbine 20. Als Brennstoff k für die Brennkammer 22 des Gasturbinenteils 4 dient das von einer Kohlevergasungsanlage 30 mittels eines Kohlevergasers 32 erzeugte Kohlegas k. Der zugeführte Brennstoff Kohle ist mit b bezeichnet. Das Kohlegas wird über eine(n) nachgeschaltete(n) Wärmetauscher(einrichtung) 34 geführt. Die Anschlußpunkte des Sekundärkreises dieses Wärmetauschers 34 sind mit A und B bezeichnet. Anschließend wird das Kohlegas k durch eine Gasreinigungseinrichtung 36 geleitet, und es steht dann als gereinigtes Kohlegas k zur Verfügung. Für die Kohlevergasungsanlage 30 und die Dampferzeugeranlage 6 ist die jeweilige Zufuhr des Brennstoffs b bzw. g mit einem Pfeilsymbol dargestellt. Als Brennstoff g wird in bekannter Weise Kohle, Öl, Kohlegas oder auch Erdgas verwendet.

Die im Gasturbinenteil 4 von der Gasturbine 20 abgeleiteten Abgase werden ebenfalls der Dampferzeugeranlage 6 zugeführt. Diese heißen und sauerstoffhaltigen Abgase dienen in der Dampferzeugeranlage 26 als Verbrennungsluft für den dort zum Einsatz kommenden Brennstoff g. Sie heizen dort eine Economizer-Heizfläche (Anschlußpunkte C, F), eine Verdampfer-Heizfläche 42 (Anschlußpunkt E) und zwei oder mehrere Überhitzer-Heizflächen 44 und 46 auf. Die Überhitzer-Heizfläche 46 gehört dabei in bekannter Weise zu einem Zwischen- oder Mitteldruck-Überhitzer, und die Überhitzer-Heizfläche 44 gehört zu einem Hochdruck-Endüberhitzer. Zur Dampferzeugeranlage 6 gehört auch ein Druckwasserbehälter 48, dessen Eintritt an den Ausgang der Verdampfer-Heizfläche 42 angeschlossen ist. Nach Durchlaufen der Dampferzeugeranlage 6 werden die Abgase über einen nachgeschalteten Rauchgaswärmetauscher 50 als abgekühlte Abgase a beispielsweise durch einen (nicht dargestellten) Schornstein abgeführt.

Der Dampferzeugeranlage 6 ist ein Hochdruckvorwärmer 52 (Ausgangs-Anschlußpunkt D) vorgeordnet. Er ist dem Rauchgaswärmetauscher 50 parallel geschaltet.

Weiterhin ist aus Figur 1 ersichtlich, daß der aus der Niederdruckstufe 14 geleitete abgekühlte Wasserdampf über einen Kondensator 56 geführt wird. Hier wird er mit zugeführtem Kühlwasser w in Kondensat umgewandelt. Dieses Kondensat wird mittels einer ersten Pumpe 58 über einen oder mehrere Niederdruckvorwärmer 60 in einen Speisewasserbehälter 62 gepumpt. Mit einer zweiten Pumpe 64 wird jetzt das als Speisewasser bezeichnete Kondensat in das allgemein mit 66 bezeichnete Hochdruck-Speisewassersystem gepumpt. Vorliegend wird das Speisewasser zunächst parallel durch den Hochdruckvorwärmer 52 und den Rauchgas-Wärmetauscher 50 gepumpt. Dabei wird es durch die Wärmeenergie des Rauchgas-Wärmetauschers 50 vorgewärmt. Vom Austritts-Anschlußpunkt D dieser Parallelschaltung 50, 52 kann das Hochdruck-Speisewasser nun gemäß der vorliegenden Erfindung veschiedene Wege nehmen. Insgesamt drei Varianten V1 bis V3 werden anhand der Tabelle in Figur 2 verdeutlicht.

Gemäß der ersten Schaltungsvariante V1 sind die Anschlußpunkte A und C, B und D sowie E und F jeweils paarweise miteinander verbunden. Es ist also die Wärmetauschereinrichtung 34 der Economizer-Heizfläche 40 der Dampferzeugeranlage 6 vorgeschaltet. Auf diese Weise ist der Wärmetauscher 34 sekundärseitig direkt in den Hochdruck-Speisewasserlauf des Dampfturbinenteils 2 eingeschaltet. Dadurch wird das bereits durch Entnahmedampf in den Komponenten 60, 52 und durch Kesselabgase im Rauchgas-Wärmetauscher 50 vorgewärmte Hochdruck-Speisewasser zusätzlich durch Wärmeenergieabgabe des Wärmetauschers 34 auf direktem Wege erhitzt. Über die nachgeschaltete Economizer-Heizfläche 40 wird das Speisewasser mittels der nachgeschalteten Verdampfer-Heizfläche 42 in Dampf umgewandelt und über den Druckwasserbehälter 48 der Zwischen-oder Mitteldruck-Überhitzer-Heizfläche 44 zugeführt. Der überhitzte Dampf gelangt von dort in den Hochdruckteil 10 der Dampfturbine 8. Vom Ausgang des Hochdruckteils 10 führt der Dampfweg sodann über die Zwischen-oder Mitteldruck-Überhitzer-Heizfläche 46 an den Eingang der Mitteldruckstufe 12. Nach Durchlaufen dieser Mitteldruckstufe 12 gelangt der Dampf in die Niederdruckstufe 14 und von dort schließlich in den Kondensator 56. Mit dem Antrieb des Generators 18 wird die Wärmeenergie letztlich in elektrische Energie umgewandelt. Dabei ist anzumerken, daß anstelle einer mehrstufigen Dampfturbine 8 auch zwei Dampfturbinen (nicht gezeigt) auf dieselbe Welle 16 arbeiten können.

Im Ausführungsbeispiel nach Figur 1 ist ein Wärmeschaltplan eines Dampfkraftwerks mit nur einfacher Zwischenüberhitzung in der Überhitzer-Heizfläche 46 dargestellt. Dabei ist der Hochdruckstufe 10 nur eine Mitteldruckstufe 12 und dieser wiederum nur eine Niederdruckstufe 14 nachgeschaltet. Mit dieser häufig angewendeten Schaltmaßnahme wird bekanntermaßen ein hoher Energieumwandlungsgrad erreicht. Auch andere Wärmeschaltungen können zum Einsatz kommen, wie z.B. mit zweifacher Zwischenüberhitzung.

Nach dem Austritt aus der Niederdruckstufe 14 gelangt der abgekühlte Dampf zum Kondensator 56. Von dort wird er nunmehr als Kondensat in der bereits beschriebenen Weise über die Pumpen 58, 64 dem Speisewassersystem 66 der Dampferzeugeranlage 6 zugeführt.

Die Schaltvarianten V2 bis V3 in der Tabelle nach Figur 2 sehen weitere Möglichkeiten der Wärmeenergieübertragung vom Wärmetauscher 34 der Kohlevergasungsanlage 30 zum Hochdruckspeisewassersystem 66 der Dampferzeugeranlage 6 vor.

Bei der Variante V2 sind die Anschlußpunkte A und E, B und F sowie C und D jeweils paarweise miteinander verbunden. Dadurch wird erreicht, daß die Wärmetauschereinrichtung 34 zwischen die Economizer-Heizfläche 40 und die Verdampferheizfläche 42 geschaltet ist. Auch hier wieder wird die Sekundärseite des Wärmetauschers 34 direkt vom Hochdruck-Speisewasser des Speisewassersystems 66 durchströmt.

Bei der Variante V3 sind die drei Anschlußpunkte A, E und F einerseits und die drei Anschlußpunkte B, C und D andererseits jeweils zusammengelegt. Dadurch liegt eine Parallelschaltung von Economizer-Heizfläche 40 und Verdampfer-Heizfläche 42 vor. Nur ein Teilstrom des Speisewassers strömt hier durch den Wärmetauscher 34.

## Patentansprüche

1. Kombinierte Gas- und Dampfturbinen-Anlage mit einer dem Gasturbinenteil (20) vorgeschalteten Kohlevergasungsanlage (30) mit einer Wärmetauschereinrichtung (34), vorzugsweise mit einer der Wärmetauschereinrichtung (34) nachgeschalteten Gasreinigungseinrichtung (36), mit einer vom Abgas der Gasturbine (20) durchströmten Dampferzeugeranlage (6) mit Economizer-Heizflächen (40), Verdampfer-Heizflächen (42) und Überhitzer-Heizflächen (44), und mit einem mit der Dampferzeugeranlage (6) verbundenen Dampfturbinenteil (2), der ein Hochdruck-Speisewassersystem (66) besitzt,
**dadurch gekennzeichnet,** daß die Wärmetauschereinrichtung (34) der Kohlevergasungsanlage (30) so geschaltet ist, daß sie ihre Wärmeenergie zur Speisewassererwärmung an das Hochdruck-Speisewassersystem (66) des Dampfturbinenteils (2) abgibt.

2. Kombinierte Gas- und Dampfturbinen-Anlage nach Anspruch 1,
**dadurch gekennzeichnet,** daß die Wärmetauschereinrichtung (34) der Economizer-Heizfläche (40) der Dampfererzeugeranlage (6) vorgeschaltet ist (Variante V1).

3. Kombinierte Gas- und Dampfturbinen-Anlage nach Anspruch 1,
**dadurch gekennzeichnet,** daß die Wärmetauschereinrichtung (34) zwischen der Economizer-Heizfläche (40) und der Verdampfer-Heizfläche (42) geschaltet ist (Variante V2).

4. Kombinierte Gas- und Dampfturbinen-Anlage nach Anspruch 1,
**dadurch gekennzeichnet,** daß die Wärmetauschereinrichtung (34) parallel zur Economizer-Heizfläche (40) geschaltet ist (Variante V3).

## Claims

1. A combined gas and steam turbine plant which comprises: a coal gasification system (30) connected upstream of the gas turbine part (20) and having a heat exchanger device (34) and preferably a gas purification device (36) connected downstream of the heat exchanger device (34); a steam generator system (6) through which the exhaust gas of the gas turbine (20) flows, having economizer heating surfaces (40), evaporator heating surfaces (42) and superheater heating surfaces (44); and a steam turbine part (2) connected to the steam generator system (6) and including a high pressure feedwater system (66),
characterised in that
the heat exchanger device (34) of the coal gasification plant (30) is connected in such a way that it gives up its heat energy to the high pressure feedwater system (66) of the steam turbine part (2) for feedwater heating.

2. A combined gas and steam turbine plant according to claim 1, characterised in that the heat exchanger device (34) is connected upstream of the economizer heating surface (40) of the steam generator system (6) (variant V1).

3. A combined gas and steam turbine plant according to claim 1, characterised in that the heat exchanger device (34) is connected between the economizer heating surface (40) and the evaporator heating surface (42) (variant V2).

4. A combined gas and steam turbine plant according to claim 1, characterised in that the heat exchanger device (34) is connected parallel to the economizer heating surface (40) (variant V3).

## Revendications

1. Installation combinée de turbines à gaz et à vapeur comportant une installation (30) de gazéification de charbon, installée en amont de la partie formant turbine à gaz (20) et comportant un échangeur de chaleur (34), de préférence un dispositif d'épuration des gaz (36) monté en aval de l'échangeur de chaleur (34), une installation de production de vapeur (6) traversée par le gaz d'échappement de la turbine à gaz (20) et comportant des surfaces de chauffe (40) d'un économiseur, des surfaces de chauffe (45) d'un évaporateur et des surfaces de chauffe (47) d'un surchauffeur, et une partie formant turbine à vapeur (2), qui est reliée à l'installation de production de vapeur (6) et possède un système d'alimentation en eau à haute pression (66), caractérisée par le fait que l'échangeur de chaleur (34) de l'installation (30) de gazéification de charbon est activé de telle sorte qu'il délivre son énergie thermique, pour chauffer l'eau d'alimentation, au système d'alimentation en eau à haute pression (66) de la partie formant turbine à vapeur (2).

2. Installation combinée à turbines à gaz et à vapeur suivant la revendication 1, caractérisée par le fait que l'échangeur de chaleur (34) est monté en amont de la surface de chauffe (40) de l'économiseur de l'installation de production de vapeur (6) (variante V1).

3. Installation combinée à turbines à gaz et à vapeur suivant la revendication 1, caractérisée par le fait que l'échangeur de chaleur (34) est monté entre la surface de chauffe (40) de l'économiseur et la surface de chauffe (42) de l'évaporateur (variante V2).

4. Installation combinée à turbines à gaz et à vapeur suivant la revendication 1, caractérisée par le fait que l'échangeur de chaleur (34) est monté en parallèle avec la surface de chauffe (40) de l'économiseur (variante V3).
